# EUROPEAN PATENT APPLICATION

(11) **EP 4 491 351 A1**
(43) Date of publication of application: **15.01.2025**
(21) Application number: 23184444.0
(22) Date of filing: 10.07.2023
(51) Int. Cl.: B25J 11/00, H01L 21/677, H01L 21/687, B66F 9/06

(54) **A TRANSPORTING SYSTEM FOR TRANSPORTING A MACHINING-RELATED OBJECT**

(71) Applicant: System 3R International AB, 162 50 Vällingby (SE)
(72) Inventor: Blixt, Mårten, 178 34 Ekerö (SE)
(74) Representative: Li Schrag, Yue

(57) **Abstract**

The present invention is related to a transport system for transporting a machining-related object. The system comprises a carrier for holding the machining-related object, an autonomous vehicle and a lifting device. The carrier includes a plurality of receiving elements and a plurality of receiving means. The autonomous vehicle includes a plurality of coupling elements for engaging with the receiving elements of the carrier. The lifting device is arranged at the outside of the autonomous vehicle and includes a column provided with a guide rail, a gripper movably mounted on the guide rail of the column, and a driving unit configured to move the gripper on the guide rail. The gripper is provided with a plurality of coupling means for being engaged with the receiving means of the carrier.

## Description

### FIELD OF THE INVENTION

The present invention is related to a system for transporting a machining-related object. In further, the present invention is related to a manufacturing system for machining a part by a machine tool.

### BACKGROUND OF INVENTION

Since many years, automation for machining is highly relevant to increase the productivity. Different automation systems such as robot, automatic pallet changer, and automatic tool changes are widely used in the production. In the machining workshops, a plenty of objects, for example, workpieces, produced parts, machining tools must be transported between different stations and from one machine tool to a another machine tool. Until now, transporting these objects is not fully automated and still requires manpower. Driverless transport vehicles are already widely applied in many production facilities and logistic centers. Now, they are also intended to be used in the machining workshops.

US 2020/0324976 discloses a robotic cart including a cart with four wheels and a robot which is autonomously moveable. The robot is featured with a docking module such that the cart can be docked on the robot. In this way, the robot can move with the cart to transport any objects loaded on the cart.

However, such system has several drawbacks if it is applied in the machining workshop. In order to combine with other automation systems applied for the machine tools, the robot must be positioned highly precisely. For example, if the cart carriers a pallet and the robot is moved to the proximity of the machine tool, in which the pallet should be loaded, the automatic pallet changer installed in the machine tool must be able to automatically catch the pallet on the cart. if the robot is not positioned accurately at the defined position, the automatic tool changer will not be able to grasp the pallet on the cart.

It is known that the positioning accuracy of such autonomously movable robot or driverless vehicle is less than the one of the automation systems of the machine tool. Thus, measures must be taken to overcome this drawback. US 2020/0306903 discloses an arrangement for processing workpieces. The arrangement includes at least one processing machine, a machine magazine assigned to a respective processing machine for accommodating processing tools. The arrangement further includes a robot and a driverless base frame for carrying the robot.

In this system, the robot is integrated on the driverless vehicle. The driverless vehicle must carry additional loads, namely robot all the time, this consumes unnecessary power for driving the vehicle.

### SUMMARY OF THE INVENTION

It is an objective of this invention to provide a transport system for transporting a machining-related object which overcome the drawbacks of the systems shown in the prior art. it is a further objective of this invention to provide a transport system for transporting a machining-related object which has a simple construction. Moreover, it is a further objective of this invention to provide a transport system for transporting a machining-related object which requires low power.

According to the present invention, these objectives are achieved through the features of independent claims. In addition, further advantageous embodiments follow from the dependent claims and the description.

The present invention is directed to a transporting system for transporting a machining-related object. The transporting system comprises a carrier for holding the machining-related object, an autonomous vehicle and a lifting device arranged at the outside of the autonomous vehicle. The carrier includes a plurality of receiving elements and a plurality of receiving means. The autonomous vehicle includes a plurality of coupling elements for engaging with the receiving elements of the carrier. The lifting device includes a gripper and a driving unit configured to move the gripper in the vertical direction. The gripper is provided with a plurality of coupling means for being engaged with the receiving means of the carrier.

The machining-related object includes all the objects required for machining by a machine tool or produced by machining. They can be for example, a workpiece, a machining tool, a produced part, a measuring device. In particular, the machining-related object can also be a pallet for holding an object. During machining manufacturing many machining-related object such as workpiece, machining tool, produced part must be transported from one place to another place in the manufacturing facility, in particular from one machine tool to another machine tool. The carrier can be loaded on the lifting device by a robot or manually. Then the machining-related object can be loaded on the carrier manually or automatically. For example, if the machining-related object is a pallet, an automatic pallet changer can load the pallet on the carrier. When the autonomous vehicle is driven to the defined position, the lifting device can load the carrier on the autonomous device.

The machine tool can be a machining tool for milling, laser machining, electrical discharge machining, or additive manufacturing.

The positioning accuracy of the autonomous vehicle is not sufficient to be used with the automation systems for machining, such as automatic pallet changers or robots for gripping the objects. For example, a robot is used to pick up the object carried by the autonomous vehicle. Due to the positioning inaccuracy, the autonomous vehicle cannot reach the exactly same position each time when it brings the objects to the robot. It means there is a positioning deviation of the vehicle. Thus, it can happen that the robot cannot pick up the object because the vehicle is positioned at a different position than expected. it is possible to arrange additional sensors to monitor the position of the vehicle to determine the position of the vehicle very precisely. However, such solution is complex and increases the costs of the system.

To solve this problem, the lifting device is arranged at the outside of the vehicle serving as an intermediate station for temporally holding the carrier. The positioning accuracy of the lifting device is much higher than the one of the autonomous vehicle. Additionally, the automation system of the machine tool, such as the robot can be calibrated once according to the position of the lifting device. Since the lifting device is fixedly mounted at one position, automation system always know exactly the position of the lifting device.

When the object can be first temporally stored on the lifting device, the automation system of the machine tool can reliably pick up the objects from the lifting device or load the objects on the lifting device. The coupling mechanism between the gripper and the carrier and the coupling mechanism between the vehicle and carrier are designed in a way that the positioning inaccuracy of the vehicle can be tolerated.

The transporting system of the present invention compensates the positioning inaccuracy of the autonomous vehicle by providing the lifting device at the outside of the vehicle. Additionally, the transporting system of the present invention has the advantage that less weight must be carried by the autonomous vehicle, since the lifting device is arranged at the outside of the vehicle.

In further, not only the coupling means are mounted on the gripper but also the coupling elements are provided on the vehicle. This is important for the application for machining, because the vehicle must transport the object from machine tool to machine tool. The carrier must be transferred from the vehicle to the lifting device and from the lifting device back to the vehicle.

When the carrier having the object thereon must be loaded from the vehicle to the lifting device, the autonomous vehicle is driven to a defined position closely to the lifting device. The lifting device is configured that the gripper is moved from a start position upwards until the coupling means are engaged with the receiving means at a second position and the gripper is moved further upwards until the coupling elements are disengaged from the receiving elements at a third position. Especially, an end position in the vertical direction is defined, and the gripper is controlled to stop at this end position. This means that the gripper is further moved upwards from the third position to the end position. Preferably, the gripper moves continuously from the start position to the end position. Alternately, the gripper stops at the second position and/or at the third position. In particular, the speed of the gripper can be constant or variable.

When the carrier having the object thereon must be loaded from the lifting device to the vehicle, the autonomous vehicle is driven to a defined position closely to the lifting device. The lifting device is configured that the gripper is moved downwards until the coupling elements are engaged with the receiving elements and the gripper is moved further downwards until the coupling means are disengaged from the receiving means.

The carrier is a stable and rigid element, because the machining-related objects can have a weight up to 200Kg. This is also applied for the lifting device. Thus, the lifting device is designed in a way that this load can be carried.

Since the object can have a high weight, arranging the lifting device at the outside of the autonomous vehicle can dramatically reduce the load weight to be carried by the vehicle and reduce the energy consumption of the vehicle.

The autonomous vehicle can be any moving means which can move in a driverless way. The coupling elements have a simple design, thus, it allows to apply any autonomous vehicles for the transport system of the present invention.

In some embodiments, the coupling element and the coupling mean has a top portion having a conical shape. This allows the coupling element can be easily coupled to the receiving element and the coupling means can be easily coupled to the receiving means.

In particular, the angle of the conical shaped top portion is in the range of 10 to 40 degree. This angle ease the decoupling of the coupling elements and the receiving element and the coupling means and the receiving means, respectively. The top portion can also have other shapes, such as pyramid, cylinder, and cube.

In a preferred variant, the coupling element has a supporting portion and a cone arranged on the top of the supporting portion. The supporting portion has a cylindrical shape, but it is also possible to design the supporting element having other shapes, such as cube or triangular prism.

In a preferred variant, the coupling element has a guide portion arranged between the supporting element and the cone for easily guiding the cone into the receiving element of the carrier. In particular, the guide portion has a short length to reduce the risk that the coupling element is stuck in the receiving element of the carrier. Preferably, the guide portion has a cylindrical shape. However, it can also has other shapes, such as cube or triangular prism.

In one variant, the supporting portion, the guiding portion and the cone are made in one piece. In other variant, the guiding portion and cone are made in one piece and connected with the supporting portion. It is possible to make all three portions in the same material, for example, steel or aluminum. Preferably, the cone and the guiding portion is made in one material, for example steel to improve the strength and reduce wear and the supporting element made in another material, for example aluminum to keep the weight low.

In an advantageous variant, the supporting portion is designed in a manner that the carrier sits on the supporting portion when the carrier is engaged with the coupling elements. This provides a simple construction. The coupling element serves not only as an engaging element but also as a supporting element to hold the carrier.

The coupling means has a pin having a conical shape. In a preferred variant, the coupling means has a guiding section, on which the pin is fixed. The guiding section stably sits on the gripper. it is possible to providing a supporting section arranged below the guiding section. In this variant, the supporting section sits on the gripper. When the coupling means are engaged with the receiving means, the carrier sit on the supporting section.

In one variant, the pin and the guiding section are made in one piece. In other variant, the guiding section and pin are made in two pieces and connected together. Different materials can be used, for example, steel or aluminum. Preferably, the pin and the guiding section are made in steel to improve the strength and reduce wear.

In a preferred variant, four coupling elements are provided on the autonomous vehicle and four coupling means are provided on the gripper of the lifting device. This provides the advantage that the tilting of the carrier can be avoided and the carrier can be stably held by the coupling elements and on the coupling means.

In particular, the coupling element is shorter than the coupling mean. This gives the space that the gripper can enter into the space between the carrier and the top surface of the autonomous vehicle.

In one variant, the gripper has a U-shape and the coupling means are arranged on the two legs of U-shaped coupling means. Preferably, the coupling elements are equally allocated on the two legs. For example, two coupling elements on one leg and two coupling elements on the other leg.

In some embodiments, the coupling elements are arranged directly on the top surface of the autonomous vehicle. In order to reduce the weight to be carried by the vehicle, only the coupling elements and the carrier are mounted on the vehicle. No other elements are required. Arranging the lifting device with the gripper at the outside of the vehicle makes this possible.

In one variant, the receiving element is a through hole and the receiving means is a through hole. In particular, there are four holes as receiving elements and four bores as receiving means.

Preferably, two bores are designed to have a higher clearance than the other two bores.

In another variant, the receiving element is a recess having a cone shape and the receiving means is a recess having a cone shape. The receiving element and the receiving means can have any other shapes, provides that they can engage with the coupling element and coupling means.

The carrier can have different shapes. In one simple variant, the carrier is a plate with the receiving elements and receiving means. For example, additional holes can be bored on a typical pallet for holding a workpice. This variant is applicable for carrying one object. The object can be a light object or heavy object.

In other variant, the carrier is a tray for carrying more than one object. The tray serves as a shelf. The tray comprises a tray base, a supporting element fixed on the tray base.

At least one holding element is mounted on the supporting element for holding the machining-related objects. Preferably, each holding element includes a plurality of storing units for storing the objects therein. For example, the holding element can be arranged on the top of the supporting element and multiple storing units can be arrange in a row, each of which can hold a machining tool.

The lifting device includes a column provided with a guide rail, a gripper movably mounted on the guide rail of the column, and a driving unit configured to move the gripper on the guide rail. The gripper is provided with a plurality of coupling means for being engaged with the receiving means of the carrier.

The driving unit of lifting device is a pneumatic driving unit, an electrical drive unit or hydraulic driving unit.

In one variant, for each lifting device a control module is provided and configured to control the lifting device. Moreover, a central control unit is provided and configured to control the autonomous vehicle. The central control unit and the control module are configured to be able to communicate with each other.

Preferably, the central control unit is configured to control multiple autonomous vehicles. The central control unit controls the autonomous vehicle to move to different lifting devices. When it reaches the position closely to the lifting device, the central unit sends a signal to the control module of the corresponding lifting device such that the control module controls the lifting device to move the gripper.

Alternatively, the central control unit is configured not only to control the autonomous vehicles but also to control the lifting devices.

The present invention is directed to a manufacturing system comprising a plurality of machine tools and an automation device and the system for transporting the carrier. The lifting device is fixedly arranged in the proximity of the machine tool. The autonomous vehicle is applied to transport the workpiece, produced part, machining tools between the machine tools. The objects are first taken over by the gripper and further loaded into the machine tool by the automation device. The automation device can be a robot, an automatic tool changer, or an automatic pallet changer.

The present invention is related to a method for transporting a machining-related object by applying the transporting system of the present invention. The method comprises the steps of: arranging the carrier on the lifting device; controlling the autonomous vehicle to move to the lifting device; and transferring the carrier having the machining-related object from the lifting device to the autonomous vehicle, in particular by moving the gripper in a manner such that the coupling elements are engaged with the receiving elements and the coupling means are disengaged with the receiving means.

In a preferred variant, the gripper is controlled to move upwards such that the coupling elements are first at least partially engaged with the receiving elements and then the coupling means are disengaged with the receiving means.

Moreover, the method further comprises the steps of: controlling the autonomous vehicle having the carrier thereon to move to the lifting device; and transferring the carrier having the machining-related object from the autonomous vehicle to the lifting device, in particular by moving the gripper in a manner such that the coupling means are engaged with the receiving means and the coupling elements are disengaged with the receiving elements.

Preferably, the gripper is controlled to move downwards such that the coupling means are first engaged with the receiving means and then the coupling elements are disengaged with the receiving elements.

### BRIEF DESCRIPTION OF THE DRAWINGS

In the following, a more particular description of the present invention is further described. The embodiments are described and explained with details with reference to accompanying drawings in which:
- Fig.1: illustrates a three-dimensional view of a system of the present invention;
- Fig.2: illustrates a three-dimensional view of an autonomous vehicle holding a first variant of a carrier;
- Fig.3: illustrates a three-dimensional view of a lifting device;
- Fig.4: illustrates the state that the coupling means are engaged with the receiving means;
- Fig.5: illustrates state that the coupling elements are engaged with the receiving element;
- Fig.6: illustrates a part of the coupling element;
- Fig.7: illustrates a sectional view of engaging the coupling element with the receiving element of the carrier;
- Fig.8: illustrates a three-dimensional view of a tray as the other variant of the carrier;
- Fig.9: illustrates the top view of a tray base;
- Fig.10: illustrates a three-dimensional view of an autonomous vehicle holding the tray; and
- Fig.11: illustrates a three-dimensional view of lifting the tray from the autonomous vehicle.

### EXEMPLARY EMBODIMENTS

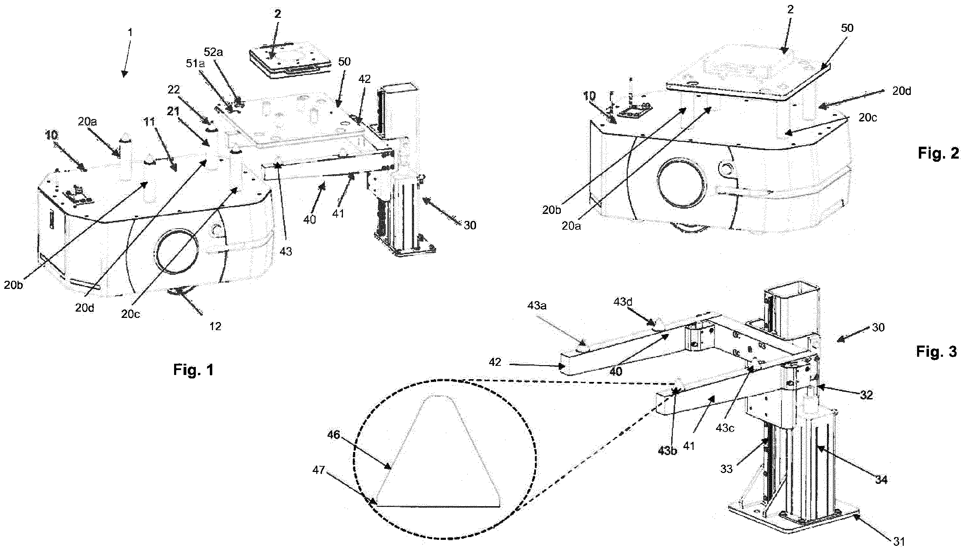

The figure 1 shows a three-dimensional view of a transport system 1 which comprises an autonomous vehicle 10 and a lifting device 30. The system is aimed to transport a carrier having a machining-related object 2 thereon.

The carrier shown in the figures 1 and 2 is the first variant of the carrier which is a plate 50. The machining-related object can be placed on the top surface of the plate.

On the top surface 11 of the autonomous vehicle four coupling elements 20a, 20b, 20c and 20d are fixed. The number of the coupling elements and the position of the coupling elements are not limited as shown in the figures. It is possible to arrange more or less coupling elements than four as shown in the figures. In figure 1, the coupling elements are positioned in a regular manner, but it is also possible to mount the coupling elements at other positions and in an irregular manner, if the carrier can be stably supported thereon. In further, figure 1 shows four identical coupling elements. However, it is not excluded to apply coupling elements with different shapes or dimensions. The coupling element shown in figure 1 has a supporting portion and guiding portion 21 and a cone 22. The supporting portion, the guiding portion and the cone are formed in one part. However, the cone can also be a separate part and connected to the guide portion. In particular, the cone is concentrically aligned with the guiding portion.

The plate 50 comprise four holes 51a, 51b, 51c and 51d as receiving element and four bores 52a, 52b, 52c, 52d as receiving means. When the carrier is loaded on the autonomous vehicle, the coupling elements are engaged with the receiving elements. In particular, each cone enters into each hole. In further, the diameter of the hole is designed in a way that the carrier sits on the coupling element. Figure 2 shows the situation when the carrier holding the machining-related object 2 is supported by the coupling elements 20a, 20b, 20c, 20d.

As shown in the figure 3, the lifting device 30 has a base 31 and a column 34 fixedly mounted on the base. The lifting device can be mounted in the proximity of a machine tool by screwing the base on the floor. The column is provided with a guide rail 33 arranged in the vertical direction. A gripper 40 is moveably mounted on the guide rail. A driving unit 32 is arranged on the column to drive the gripper to move along the guide rail in the vertical direction. The gripper has a U-shape. On the two legs 41, 42 of the U-shaped gripper 40 four coupling means 43a, 43b, 43c, 43d are mounted. As shown in the enlarged view of the coupling mean, it has a conical pin 46 and a guiding section 47 for engaging with the bores formed on the carrier.

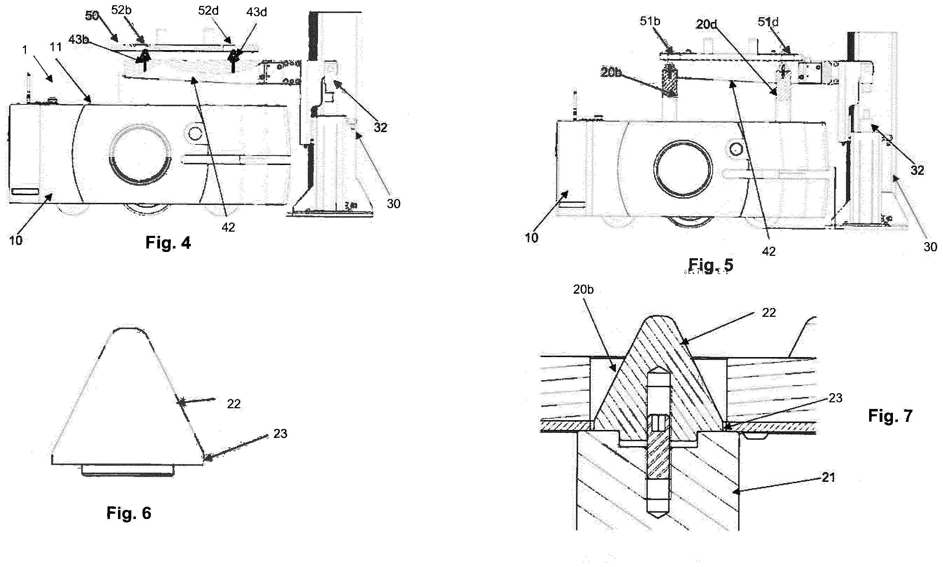

Figure 4 shows a side view of the system. Particularly, it shows the state when the plate is transferred from the autonomous vehicle to the gripper by engaging the plate with the gripper and disengaging the plate from the vehicle. To achieve this, the autonomous vehicle is driven to the defined position such that the gripper is inserted between the plate and the top surface of the vehicle 11 and the pins 43b 43d of the gripper are positioned closely to the bores 52b 52d of the plate. Then the gripper is raised by the driving unit 32 such that each pin of the gripper enters into each bore of the plate. The pin enters first into the bore then the guiding section guides the coupling mean further into the bore until it is engaged with the bore, the driving unit raises the gripper further upwards until the holes of the plate disengaged from coupling elements. By applying this procedure, the carrier is moved from a more undefined position which is given by the positioning of the autonomous vehicle, to a precisely defined position which is given by the position of the coupling mean, in particular the guiding section of the coupling mean.

Figure 5 shows a side view of the system. Particularly, it shows the state when the plate is transferred from the gripper to the autonomous vehicle by engaging the plate with the vehicle and disengaging the plate from the gripper. The transporting system of the present invention enables to tolerate the positioning deviations of the autonomous vehicle also in this stage. To achieve this, the autonomous vehicle is driven to the defined position such that the vehicle is positioned below the gripper and coupling elements are positioned roughly vertically aligned with the holes 51b 51d of the plate. Due to the positioning inaccuracy of the autonomous vehicle, the coupling elements are not exactly aligned with the holes, but the coupling elements are designed in a manner that they can be guided into the holes. Then the gripper is lowered by the driving unit 32 such that each cone of the coupling element enters into each hole of the plate. After the cones are engaged with the pins, the driving unit lowers the gripper further downwards until the bores of the plate disengaged from pins of the gripper. Finally, the plate is transferred to the actual position of the autonomous vehicle.

Figure 6 shows a side view of the cone 23 and the guiding portion 23 of the coupling element. The cone has a conical shape and the guiding portion has a cylindrical shape.

Figure 7 shows a detailed view of the engaged cone and the hole. The guiding portion 23 and the cone 22 are fully entered into the hole. The supporting portion 21 has a larger diameter than the inner diameter of the hole such that the carrier can sit on the supporting portion. As shown in the figure 7, the inner diameter of the hole is slightly larger than the diameter of the guiding portion for ensuring the engaging despite of the tolerance of the cone and guiding portion. The height of the guiding portion is much smaller than the depth of the hole to reduce the distance of the guiding path.

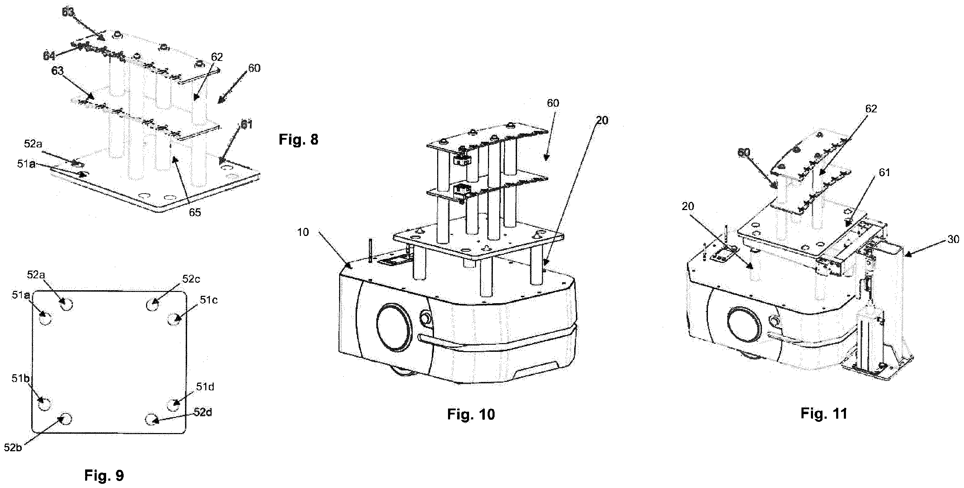

Figure 8 shows a second variant of the carrier, namely a tray 60. The tray has a tray base 61 which is a plate-like element and comprises receiving elements and receiving means. Figure 8 shows a variant that the holes and bores are provided for engaging with the coupling elements and the coupling means. However, other variants of the receiving elements and the receiving means such as a conical recess can also be applied. In further, the tray has multiple supporting element 62 standing on the tray base. On the top of the supporting elements of the tray, a holding element 63 is mounted. Each holding element comprise multiple storing units 64 for storing the machining-related object, such as a machining tool.

Figure 9 shows the arrangements of the holes and bores. In this variant, four holes and four bores are regularly distributed on at the carrier, respectively. This arrangement is complementary to the arrangement of the coupling elements and the coupling means.

Figure 10 shows the state that the tray is carried by the autonomous vehicle, in which the holes are engaged with the coupling elements.

Figure 11 illustrates the states that the autonomous vehicle is positioned at the lifting device for transferring the tray to the lifting device. Especially, the autonomous vehicle stands freely below the gripper of the lifting device. The autonomous vehicle is controlled to arrive a defined position, but it is not locked at this position for providing a certain movement freedom during the coupling of the carrier and the gripper. When the autonomous vehicle is stopped at this position, the gripper is positioned between the tray base and the top surface of the autonomous vehicle and the receiving means are positioned roughly over the coupling means of the gripper. Then the lifting device is driven to move the gripper upwards until the coupling means of the gripper are guided into the bores and finally engaged with the bores of the tray. Since the coupling mean has a cone shape, the positioning error of the autonomous vehicle can be compensated.

### LIST OF REFERENCES

- 1: transporting system
- 2: pallet
- 10: autonomous vehicle
- 11: top surface of the autonomous vehicle
- 12: wheel
- 20a: first coupling element
- 20b: second coupling element
- 20c: three coupling element
- 20d: fourth coupling element
- 21: supporting portion of the coupling element
- 22: cone
- 23: guiding portion of the coupling element
- 30: lifting device
- 31: base
- 32: driving unit
- 33: guide rail
- 34: column
- 40: gripper
- 41: first leg
- 42: second leg
- 43a: first coupling means
- 43b: second coupling means
- 43c: third coupling means
- 43d: fourth coupling means
- 46: pin
- 47: guiding section
- 50: plate
- 51a: first hole of the plate
- 51b: second hole of the plate
- 51c: third hole of the plate
- 51d: fourth hole of the plate
- 52a: first bore of the plate
- 52b: second bore of the plate
- 52c: third bore of the plate
- 52d: fourth bore of the plate
- 60: tray
- 61: tray base
- 62: supporting element of the tray
- 63: holding element
- 64: storing unit

## Claims

1. A transport system (1) for transporting a machining-related object (2) comprising:
a. a carrier (50, 60) for holding the machining-related object including a plurality of receiving elements (51a, 51b 51c 51d) and a plurality of receiving means (52a, 52b 53c 53d);
b. an autonomous vehicle (10) including a plurality of coupling elements (20a, 20b, 20c, 20d) for engaging with the receiving elements of the carrier; and
c. a lifting device (30) arranged at the outside of the autonomous vehicle, wherein the lifting device includes a gripper (40) and a driving unit configured to move the gripper in at least one direction, in particular in the vertical direction, wherein the gripper is provided with a plurality of coupling means (43a, 43b, 43c, 43d) for being engaged with the receiving means of the carrier.

2. The transport system according to claim 1, wherein the lifting device is configured that the gripper is moved upwards until the coupling means are engaged with the receiving means and the gripper is moved further upwards until the coupling elements are disengaged from the receiving elements for transferring the carrier from the autonomous vehicle to the lifting device.

3. The transport system according to claim 1 or 2, wherein the lifting device is configured that the gripper is moved downwards until the coupling elements are engaged with the receiving elements and the gripper is moved further downwards until the coupling means are disengaged from the receiving means for transferring the carrier from the lifting device to the autonomous vehicle.

4. The transport system according to one of claims 1 to 3, wherein the coupling element has a top portion having a conical shape and the coupling mean has a top portion having a conical shape, in particular the angle of the conical shaped top portion is in the range of 10 to 40 degree.

5. The transport system according to one of claims 1 to 4, wherein four coupling elements are provided on the autonomous vehicle and four coupling means are provided on the gripper of the lifting device.

6. The transport system according to claim 5, wherein the coupling element has a supporting portion, a guide portion arranged on the top of the supporting portion and a cone on the top of the guide portion, in particular the supporting portion is designed in a manner that the carrier sits on the supporting portion when the carrier is engaged with the coupling elements.

7. The transport system according to one of claims 1 to 6, wherein the coupling means has a guiding section (47) and a pin (46) having a conical shape formed on the guiding section.

8. The transport system according to one of claims 1 to 7, wherein the gripper has a U-shape and the coupling means are arranged on the two legs (41) of the U-shaped coupling means.

9. The transport system according to claim one of claims 1 to 8, wherein the receiving element and the receiving mean is a through hole or a recess having a cone shape.

10. The transport system according to one of claims 1 to 8, wherein the carrier is a plate having the receiving elements and the receiving means formed thereon.

11. The transporting system according to one of claims 1 to 8, wherein the carrier is a tray (60) comprising a tray base (61) having the receiving elements and the receiving means formed thereon, a supporting element (62) fixed on the tray base, wherein at least one holding element (63) is mounted on the supporting element for holding the machining-related objects.

12. The transporting system according to one of the claims 1 to 11, wherein the lifting device includes a column (31) provided with a guide rail (33), a gripper (40) movably mounted on the guide rail of the column, and the driving unit configured to move the gripper on the guide rail.

13. A manufacturing system comprising a plurality of machine tools, the transporting system according to one of the claims 1 to 11 and an automation device for transferring the machining-related object from the lifting device to the machine tool, wherein the lifting device is fixedly arranged in the proximity of the machine tool.

14. A method for transporting a machining-related object by applying the transporting system according to one of claims 1 to 12 comprising the following steps:
a. arranging the carrier on the lifting device;
b. controlling the autonomous vehicle to move to the lifting device; and
c. transferring the carrier having the machining-related object from the lifting device to the autonomous vehicle, in particular by moving the gripper in a manner such that the coupling elements are engaged with the receiving elements and the coupling means are disengaged with the receiving means.

15. The method according to claim 14, wherein the method further comprises the following steps:
a. controlling the autonomous vehicle having the carrier thereon to move to the lifting device; and
b. transferring the carrier having the machining-related object from the autonomous vehicle to the lifting device, in particular by moving the gripper in a manner such that the coupling means are engaged with the receiving means and the coupling elements are disengaged with the receiving elements.
